# EUROPÄISCHE PATENTSCHRIFT

(11) **EP 0 924 840 B1**
(45) Veröffentlichungstag und Bekanntmachung des Hinweises auf die Patenterteilung: **15.05.2002**
(21) Anmeldenummer: 98114618.6
(22) Anmeldetag: 04.08.1998
(51) Int. Cl.: H02K 5/24, F04D 29/66, F16F 1/373

(54) **Antriebseinheit**
Drive unit
Unité d' entraînement

(30) Priorität: 16.12.1997 DE 19755805
(43) Veröffentlichungstag der Anmeldung: 23.06.1999
(73) Patentinhaber: ROBERT BOSCH GMBH, 70442 Stuttgart (DE)
(72) Erfinder: Gross, Gerhard, 77886 Lauf (DE); Nolting, Peter, 77830 Buehlertal (DE); Santarossa, Bruno, 72227 Egenheusen (DE)

(56) Entgegenhaltungen:
- WO-A-95/16150
- DE-U- 9 320 886
- FR-A- 1 255 721
- GB-A- 2 030 377
- US-A- 2 135 785
- US-A- 3 191 897

## Beschreibung

### Stand der Technik

Die Erfindung geht aus von einer Antriebseinheit, insbesondere für Radiallüfter, der im Oberbegriff des Anspruchs 1 definierten Gattung.

Bei einer bekannten Antriebseinheit dieser Art (DE 43 34 124 A1) ist das Dämpfungselement aus einer auf dem Lagerzapfen aufgesteckten Hülse und einer auf die Außenwand der Hülse aufgebrachten Dämpfungsbuchse aus elastischem Material zusammengesetzt. Die Dämpfungsbuchse übergreift dabei die Halterung auf deren beiden Stirnseiten mit je einem radial vorspringenden Kragen. Zur verdrehsicheren Festlegung des Dämpfungselements in der Halterung trägt letztere nockenförmige Vorsprünge, die in zugordneten Auskehlungen in der Dämpfungsbuchse eingreifen. Ein solches Dämpfungselement eliminiert Motorschwingungen und vermindert störende Geräusche.

### Vorteile der Erfindung

Die erfindungsgemäße Antriebseinheit mit den Merkmalen des Anspruchs 1 hat den Vorteil, daß durch die Rollenkörper des Dämpfungselements der Elektromotor in einem definierten Bereich tangential schwingen kann. Zugleich kann der in offener oder geschlossener Bauweise wahlweise ausführbare Elektromotor zwischen zwei Gehäuseflächen axial unverschiebbar eingepreßt werden, wobei axiale Motor- und Gehäusetoleranzen kompensiert werden. Auf die Ausbildung eines aufwendigen Festlagers kann damit verzichtet werden. Über das Deformationsverhalten der Rollenkörper des vorzugsweise aus Gummi gefertigten Dämpfungselements, das problemlos vorgegeben werden kann, werden die Druckkräfte auf die Lagerstelle des Elektromotors abgestimmt, so daß bei offener Bauweise des Elektromotors dessen Lagerbügel nicht deformiert werden und das Axialspiel des Elektromotors in dem geforderten Toleranzbereich.

Das erfindungsgemäß ausgebildete Dämpfungselement übernimmt damit eine Doppelfunktion, indem es einerseits eine vibrations- und geräuschmindernder Aufhängung des Motors im Gehäuse gewährleistet und andererseits Maßtoleranzen in Axialrichtung aufnimmt, womit wiederum eine kostengünstige Clipsbefestigung des Motors ermöglicht wird, was die Montage wesentlich vereinfacht.

Werden gemäß einer bevorzugten Ausführungsform der Erfindung zwei Dämpfungselemente an jedem Lagerzapfen des Elektromotors, also kommutator- und abtriebsseitig, vorgesehen, so wird der Elektromotor noch weicher aufgehängt und eine höhere Geräuschminderung erzielt.

Durch die in den weiteren Ansprüchen aufgeführten Maßnahmen sind vorteilhafte Weiterbildungen und Verbesserungen der im Anspruch 1 angegebenen Antriebseinheit möglich.

### Zeichnung

Die Erfindung ist anhand eines in der Zeichnung dargestellten Ausführungsbeispiels im folgenden näher beschrieben. Es zeigen:
- Fig. 1: einen Längsschnitt einer elektromotorischen Antriebseinheit für einen Radiallüfter,
- Fig. 2: eine Draufsicht eines Dämpfungselements in der Antriebseinheit gemäß Fig. 1,
- Fig. 3: einen Schnitt längs der Linie III-III in Fig. 2,
- Fig. 4: eine Darstellung des Ausschnitts IV in Fig. 1 mit einer Modifizierung der Antriebseinheit.

### Beschreibung des Ausführungsbeispiels

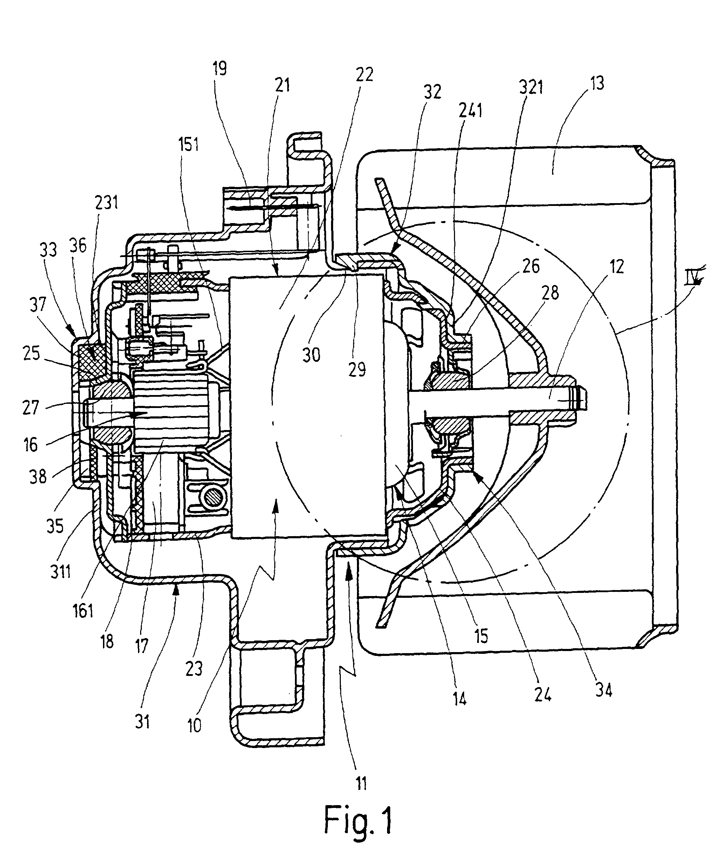

Die in Fig. 1 im Längsschnitt dargestellte Antriebseinheit mit Radiallüfter als Ausführungsbeispiel für eine allgemeine elektromotorische Antriebseinheit weist einen hier als Kommutatormotor ausgeführten Elektromotor 10 auf, der in einem Gehäuse 11 aufgenommen ist und mit einer Motor- oder Abtriebswelle 12 aus dem Gehäuse 11 vorsteht. Auf der Abtriebswelle 12 ist ein Lüfterrad 13 befestigt. Auf der Abtriebswelle 12 sitzt in bekannter Weise der Anker oder Rotor 14 mit Ankerwicklung 15, deren Spulenenden 151 an den Kollektorlamellen 161 eines auf der Abtriebswelle 12 drehfest sitzenden Kollektors oder Kommutators 16 angeschlossen sind. Die Stromzufuhr zu der Ankerwicklung 15 erfolgt in bekannter Weise über mindestens zwei Kohlebürsten 17, die in einem Bürstenhalter 18 radial verschieblich geführt sind und sich unter dem Druck von Bürstenfedern auf die Kommutatorlamellen 161 des Kommutators 16 aufpressen. Die Kohlebürsten 17 sind mit einem Anschlußstecker 19 elektrisch leitend verbunden. Der Rotor 14 ist von einem Stator 21 umschlossen, von dem ein das Motorgehäuse 22 bildendes Rückschlußrohr zu sehen ist. An den beiden stirnseitigen Enden des Rückschlußrohrs bzw. des Motorgehäuses 22 ist jeweils ein Lagerbügel 23 bzw. 24 angeordnet, wobei der Lagerbügel 23 den Kommutator 16 überspannt und den Bürstenhalter 18 trägt. In jedem Lagerbügel 23 bzw. 24 ist koaxial ein Lagerzapfen 25 bzw. 26 ausgebildet, in dem ein Gleitlager 27 bzw. 28 für die Abtriebswelle 12 aufgenommen ist.

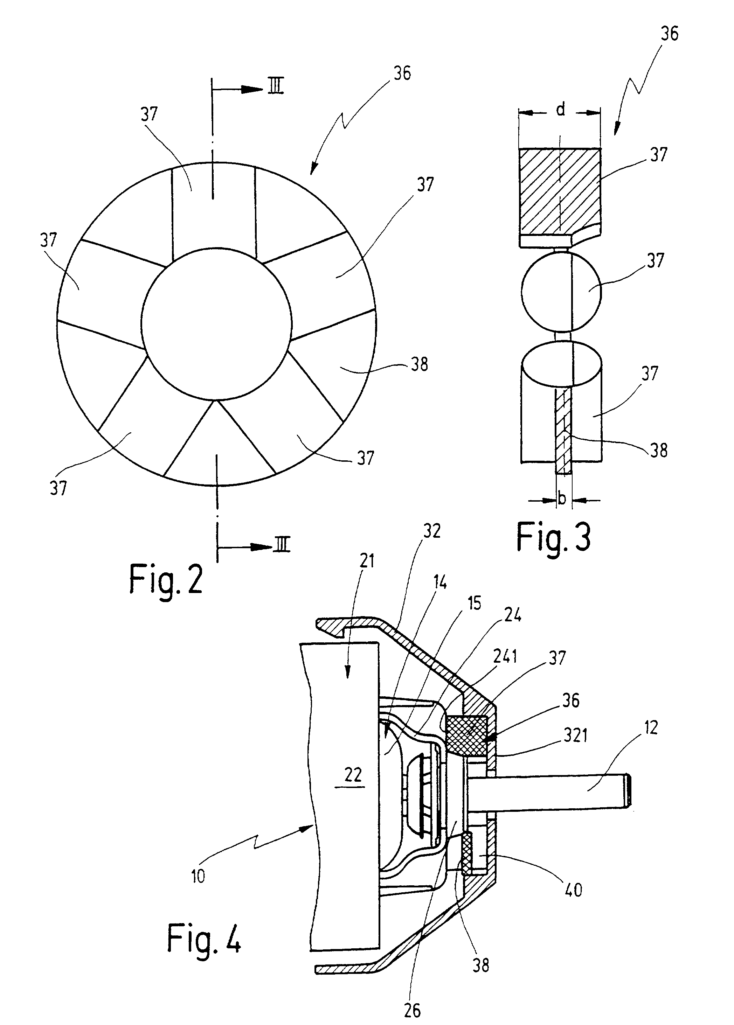

Das Gehäuse 11 ist zweiteilig ausgeführt und setzt sich zusammen aus einem Gehäusetopf 31 und einer Gehäusekappe 32, die mit dem Gehäusetopf 31 verclipst ist. Die Verclipsung erfolgt mittels mehrerer an der Gehäusekappe 32 ausgebildeter Rastnasen 29, die in korrespondierende Rastlöcher 30 im Gehäusetopf 31 einrasten. In Fig. 1 ist von den mehreren, vorzugsmäßig gleichmäßig über den Umfang von Gehäusetopf 31 und Gehäusekappe 32 verteilten Rastverbindungen aus Rastnase 29 und Rastloch 30 eine Rastverbindung zu sehen. Sowohl am Topfboden 311 des Gehäusetopfes 31 als auch am Kappenboden 321 der Gehäusekappe 32 ist eine Halterung 33 bzw. 34 für den Elektromotor 10 koaxial angeformt. Die Halterung 33 wird dabei von einer im Topfboden 311 ausgeprägten Bodenvertiefung 35 gebildet, in die der Lagerzapfen 25 teilweise hineinragt und mittels eines Dämpfungselements 36 darin radial unverschieblich festgelegt ist. Das aus elastischem Material, vorzugsweise Gummi, gefertigte Dämpfungselement 36 ist die in Fig. 2 in Draufsicht und in Fig. 3 im Schnitt vergrößert dargestelllt. Es weist eine Mehrzahl von hier fünf Rollenkörpern 37 auf, die mit radial ausgerichteten Körperachsen um vorzusweise gleiche Umfangswinkel gegeneinander versetzt angeordnet und über eine Ringscheibe 38 miteinander verbunden sind. Rollenkörper 37 und Ringscheibe 38 sind miteinander einstückig ausgeführt, wobei die im Vergleich zum Durchmesser der Rollenkörper 37 eine wesentlich kleinere Dicke aufweisende Ringscheibe 38 mittig an den Rollenkörpern 37 ansetzt und sozusagen in der Symmetrieebene des Dämpfungselements 36 liegt. In Fig. 3 ist die axiale Dicke der Ringscheibe 38 mit b und der Durchmesser der beidseitig an die Ringscheibe 38 angeformten Rollenkörper 37 mit d eingezeichnet. Die Rollenkörper 37 sind im Ausführungsbeispiel der Fig. 1 - 3 zylinderförmig ausgeführt und weisen einen kreisförmigen Querschnitt auf. Alternativ können die Rollenkörper 37 aber auch tonnen- oder kegelförmig ausgebildet werden und auch einen elliptischen Querschnitt besitzen. Das wie beschrieben ausgebildete Dämpfungselement 36 liegt mit radialem Preßsitz in der Halterung 35 ein, wobei deren Boden einen axialen Anschlag für das Dämpfungselement 36 bildet. Die Halterung 34 an der Gehäusekappe 32 wird von einem ringförmigen Bund 39 gebildet, der am Kappenboden 321 axial vorsteht und den Lagerzapfen 26 am Elektromotor 10 radial formschlüssig aufnimmt.

Zur Montage der Antriebseinheit wird der Elektromotor 10 in den Gehäusetopf 31 eingesetzt, wobei der Lagerzapfen 25 in das in der Bodenvertiefung 35 einliegende Dämpfungselement 36 eintaucht und der Lagerbügel 23 mit einer Abstützschulter 231 axial an den Rollenkörpern 37 anliegt. Nunmehr wird die Gehäusekappe 32 vom freien Ende der Abtriebswelle 12 her auf den Gehäusetopf 31 aufgesetzt, wobei der Bund 39 den Lagerzapfen 26 übergreift und der Kappenboden 321 sich an eine Abstützschulter 241 des Lagerbügels 24 anlegt. Mit axialem Druck wird nunmehr die Gehäusekappe 32 soweit auf den Gehäusetopf 31 aufgeschoben, bis die Rastnasen 19 in den Rastlöchern 30 einrasten. Damit ist der Elektromotor 10 axial spiellos im Gehäuse 11 gehalten und kann infolge der Rollenkörper 37 in einem definierten Bereich tangential schwingen, so daß seine Vibrationen und Geräusche nur erheblich reduziert über das Gehäuse 11 übertragen werden. Durch die Deformierbarkeit der Rollenkörper 37 des Dämpfungselements 36 werden axiale Motor- und Gehäusetoleranzen beim Zusammenbau der Antriebseinheit kompensiert. Dabei kann das Deformationsverhalten der Rollenkörper 37 auf die für die Lagerstellen des Elektromotors 10 zugelassenen Druckkräfte abgestimmt werden, so daß beim Einpressen des Elektromotors 10 zwischen Gehäusetopf 31 und Gehäusekappe 32 sichergestellt ist, daß die Lagerbügel 23,24 sich nicht deformieren. Bei Vermeiden der Deformation der Lagerbügel 23,24 bleibt damit das Axialspiel des Elektromotors 10 in dem geforderten Toleranzbereich. Zur Abstimmung des Deformationsverhaltens können die Rollen 37 tonnenförmig, kegelförmig oder zylinderförmig und mit kreisrundem oder elliptischem Querschnitt ausgeführt werden.

In dem in Fig. 4 dargestellten Ausschnitt der Antriebseinheit ist die gehäusekappenseitige Halterung 34 insofern modifiziert, als diese identisch wie die Halterung 33 in Fig. 1 ausgebildet ist. Im Kappenboden 321 ist hierzu eine Bodenvertiefung 40 ausgeformt, in der wiederum ein Dämpfungselement 36 gemäß Fig. 2 und 3 mit radialem Preßsitz einliegt. Wie bei der Halterung 33 in Fig. 1 liegt das Dämpfungselement 36 nur teilweise, bis etwa zur Ringscheibe 38 in der Bodenvertiefung 40 ein, da deren Tiefe etwa dem halben Durchmesser der Rollenkörper 37 entspricht. Bei zusammengesetztem Gehäuse 11 taucht der Lagerzapfen 26 in das Innere der Ringscheibe 38 ein, bis der Lagerbügel 24 mit seiner Abstützschulter 241 an den Rollenkörpern 37 anliegt, die sich ihrerseits axial am Boden der Bodenvertiefung 40 abstützen. Mit dem zweiten Dämpfungselement 36 ist der Elektromotor 10 im Vergleich zu dem Ausführungsbeispiel der Fig. 1, wo nur ein Dämpfungselement 36 verwendet ist, deutlich weicher aufgehängt, wodurch eine größere Geräuschminderung erzielt wird.

Die Erfindung ist nicht auf das vorstehend beschriebene Ausführungsbeispiel beschränkt. So braucht der Elektromotor 10 nicht, wie beschrieben, in offener Bauweise ausgeführt zu werden, bei welcher die Lagerzapfen 25,26 mittels Lagerbügel 23,24 am Motorgehäuse gehalten sind. In der gleichen Weise kann auch ein in geschlossener Bauweise ausgeführter Elektromotor, bei dem die Lagerzapfen unmittelbar an der Motorgehäusewand angeformt sind, im Gehäuse 11 aufgenommen werden, wobei die beschriebenen Vorteile in gleicher Weise erzielt werden.

## Patentansprüche

1. Antriebseinheit, insbesondere für Radiallüfter, mit einem Elektromotor (10), der eine Abtriebswelle (12) und ein Motorgehäuse (22) mit an dessen Stirnseite koaxial vorstehenden, jeweils ein Lager (27,28) für die Abtriebswelle (12) umschließenden Lagerzapfen (25,26) aufweist, mit einem den Elektromotor (10) aufnehmenden Gehäuse (11), das zwei die Lagerzapfen (25,26) übergreifende Halterungen (33,34) aufweist, und mit mindestens einem zwischen einem Lagerzapfen (25) und einer Halterung (33) einliegenden Dämpfungselement (36) aus elastischem Material, das den Elektromotor (10) radial und axial abstützt, **dadurch gekennzeichnet, daß** das Dämpfungselement (36) eine Mehrzahl von Rollenkörpern (37) mit radial ausgerichteten Körperachsen aufweist, die um vorzugsweise gleiche Umfangswinkel gegeneinander versetzt angeordnet und miteinander im wesentlichen abstandskonstant verbunden sind.

2. Antriebseinheit nach Anspruch 1, **dadurch gekennzeichnet, daß** die Verbindung der Rollenkörper (37) mittels einer Ringscheibe (38) bewirkt ist, an der die Rollenkörper (37) symmetrisch und einstückig angeformt sind.

3. Antriebseinheit nach Anspruch 2, **dadurch gekennzeichnet, daß** die axiale Dicke (b) der Ringscheibe (38) wesentlich kleiner ist als der Außendurchmesser (d) der Rollenkörper (37) und daß die Ringscheibe (38) mittig an den Rollenkörpern (37) ansetzt.

4. Antriebseinheit nach einem der Ansprüche 1 - 3, **dadurch gekennzeichnet, daß** die Rollenkörper (37) zylinder-, tonnen- oder kegelförmig ausgebildet sind und einen kreisförmigen oder elliptischen Querschnitt aufweisen.

5. Antriebseinheit nach einem der Ansprüche 1 - 4, **dadurch gekennzeichnet, daß** das Dämpfungselement (36) mit radialem Preßsitz in der Halterung (33,34) einliegt.

6. Antriebseinheit nach einem der Ansprüche 1 - 5, **dadurch gekennzeichnet, daß** das Gehäuse (11) einen Gehäusetopf (31) mit am Topfboden (311) koaxial angeformter Halterung (33) und eine den Gehäusetopf (31) deckelartig verschließende Gehäusekappe (32) mit am Kappenboden (321) koaxial angeformter Halterung (34) aufweist, daß die das mindestens eine Dämpfungselement (36) aufnehmende Halterung (33) einen axialen Anschlag für das Dämpfungselement (36) aufweist und daß das Motorgehäuse (20) zwischen den Rollenkörpern (37) des Dämpfungselements (36) und der Gehäusekappe (32) oder dem Gehäusetopf eingespannt ist.

7. Antriebseinheit nach Anspruch 6, **dadurch gekennzeichnet, daß** die gehäusetopfseitige Halterung (33) von einer Bodenvertiefung (35) im Topfboden (311) gebildet ist, in der das Dämpfungselement (36) mit Preßsitz teilweise einliegt und daß am Motorgehäuse (22) eine dem Topfboden (311) und eine dem Kappenboden (321) jeweils zugekehrte Abstützschulter (231,241) ausgebildet ist, von denen die eine an den Rollenkörpern (37) und die andere an einem korrespondierenden Anschlag an der Gehäusekappe (32), vorzugsweise an dem Kappenboden (321) selbst, anliegt.

8. Antriebseinheit nach Anspruch 6, **dadurch gekennzeichnet, daß** die gehäusetopfseitige und die gehäusekappenseitige Halterung (33,34) jeweils als Bodenvertiefung (35,40) ausgebildet ist, in der jeweils ein Dämpfungselement (36) mit Preßsitz teilweise einliegt, und daß am Motorgehäuse (22) eine dem Topfboden (311) und eine dem Kappenboden (321) zugekehrte Abstützschulter (231,241) ausgebildet sind, von denen jede sich an Rollenkörpern (37) abstützt.

9. Antriebseinheit nach Anspruch 8, **dadurch gekennzeichnet, daß** die axiale Tiefe der Bodenvertiefung (35,40) im Topfboden (311) bzw. im Kappenboden (321) kleiner ist als der Außendurchmesser der Rollenkörper (37), vorzugsweise die Hälfte davon beträgt.

10. Antriebseinheit nach einem der Ansprüche 5 - 9, **dadurch gekennzeichnet, daß** die Gehäusekappe (32) auf dem Gehäusetopf (31) aufgeclipst ist.

11. Antriebseinheit nach einem der Ansprüche 1 - 10, **dadurch gekennzeichnet, daß** die Lagerzapfen (25,26) über Lagerbügel (24,25) an dem Motorgehäuse (22) gehalten sind.

12. Antriebseinheit nach einem der Ansprüche 1 - 11, **dadurch gekennzeichnet, daß** das Dämpfungselement (36) aus Gummi hergestellt ist.

## Claims

1. Drive unit, in particular for radial fans, with an electric motor (10) which has an output shaft (12) and a motor housing (22) with bearing journals (25, 26) projecting coaxially on the end face of the latter and in each case surrounding a bearing (27, 28) for the output shaft (12), with a housing (11) which receives the electric motor (10) and which has two holding devices (33, 34) engaging over the bearing journals (25, 26), and with at least one damping element (36), made of elastic material, which is seated between a bearing journal (25) and a holding device (33) and which supports the electric motor (10) radially and axially, **characterized in that** the damping element (36) has a plurality of roller bodies (37) with radially oriented body axes, which are arranged so as to be offset relative to one another preferably by identical circumferential angles and are connected to one another with essentially constant spacing.

2. Drive unit according to Claim 1, **characterized in that** the connection of the roller bodies (37) is made by means of an annular disc (38), on which the roller bodies (37) are formed symmetrically and in one piece.

3. Drive unit according to Claim 2, **characterized in that** the axial thickness (b) of the annular disc (38) is substantially smaller than the outside diameter (d) of the roller bodies (37), and **in that** the annular disc (38) is attached centrally to the roller bodies (37).

4. Drive unit according to one of Claims 1-3, **characterized in that** the roller bodies (37) are of cylindrical, barrel-shaped or conical design and have a circular or elliptic cross section.

5. Drive unit according to one of Claims 1-4, **characterized in that** the damping element (36) is seated with a radial press fit in the holding device (33, 34).

6. Drive unit according to one of Claims 1-5, **characterized in that** the housing (11) has a housing bowl (31), with a holding device (33) formed coaxially on the bowl bottom (311), and a housing cap (32) closing the housing bowl (31) in a lid-like manner and having a holding device (34) formed coaxially on the cap bottom (321), **in that** the holding device (33) receiving the at least one damping element (36) has an axial stop for the damping element (36), and **in that** the motor housing (22) is clamped between the roller bodies (37) of the damping element (36) and the housing cap (32) or the housing bowl.

7. Drive unit according to Claim 6, **characterized in that** the holding device (33) located on the housing-bowl side is formed by a bottom depression (35) in the bowl bottom (311), the damping element (36) being partially seated with a press fit in said bottom depression, and **in that** the motor housing (22) has supporting shoulders (231, 241), one of which faces the bowl bottom (311) and the other of which faces the cap bottom (321) and of which one bears on the roller bodies (37) and the other on a corresponding stop on the housing cap (32), preferably on the cap bottom (321) itself.

8. Drive unit according to Claim 6, **characterized in that** the holding devices (33, 34) located on the housing-bowl side and on the housing-cap side are each designed as a bottom depression (35, 40), in which a damping element (36) is in each case partially seated with a press fit, and **in that** the motor housing (22) has formed on it supporting shoulders (231, 241), one of which faces the bowl bottom (311) and the other of which faces the cap bottom (321) and each of which is supported on roller bodies (37).

9. Drive unit according to Claim 8, **characterized in that** the axial depth of the bottom depression (35, 40) in the bowl bottom (311) or in the cap bottom (321) is smaller than the outside diameter of the roller bodies (37), preferably amounts to half of this.

10. Drive unit according to one of Claims 5-9, **characterized in that** the housing cap (32) is snapped on the housing bowl (31).

11. Drive unit according to one of Claims 1-10, **characterized in that** the bearing journals (25, 26) are held on the motor housing (22) via bearing clips (24, 25).

12. Drive unit according to one of Claims 1-11, **characterized in that** the damping element (36) is produced from rubber.

## Revendications

1. Unité d'entraînement, notamment pour ventilateur radial, comprenant un moteur électrique (10) muni d'un arbre de sortie (12) et d'un carter de moteur (22) avec en saillie de manière coaxiale par rapport à sa face frontale, un palier (27, 28) pour les éléments de paliers (25, 26) enfermant l'arbre (12), un carter (11) recevant le moteur électrique (10) et ayant deux moyens de fixation (33, 34) chapeautant les éléments de paliers (25, 26), avec au moins un élément d'amortissement (36) en matière élastique, placé entre un élément de palier (25) et le moyen de fixation (33), cet élément d'amortissement soutenant radialement et axialement le moteur électrique (10),
**caractérisée en ce que**
l'élément d'amortissement (36) comporte plusieurs rouleaux (37) avec des axes dirigés radialement et répartis de préférence de manière équi-angulaire, en étant reliés les uns aux autres essentiellement à intervalles constants.

2. Unité d'entraînement selon la revendication 1,
**caractérisée en ce que**
la liaison des rouleaux (37) est réalisée à l'aide d'un disque annulaire (38) dans lequel les rouleaux (37) sont formés de manière symétrique et en une seule pièce.

3. Unité d'entraînement selon la revendication 2,
**caractérisé en ce que**
l'épaisseur axiale (b) du disque annulaire (38) est beaucoup plus faible que le diamètre extérieur (d) des rouleaux (37) et le disque annulaire (38) vient au milieu des rouleaux (37).

4. Unité d'entraînement selon l'une des revendications 1 à 3,
**caractérisée en ce que**
les rouleaux (37) ont une forme de cylindre, de barillet ou de cône et une section circulaire ou elliptique.

5. Unité d'entraînement selon l'une quelconque des revendications 1 à 4,
**caractérisée en ce que**
l'élément d'amortissement (36) est installé dans le moyen de fixation (33, 34) avec un siège pressé radial.

6. Unité d'entraînement selon l'une quelconque des revendications 1 à 5,
**caractérisée en ce que**
le boîtier (11) comprend un boîtier en forme de pot (31) avec un moyen de fixation (33) formé coaxialement dans le fond de pot (311), et un capuchon (32) en forme de couvercle qui ferme le boîtier en forme de pot (31) avec un moyen de fixation (34) formé coaxialement sur le fond (321),
le moyen de fixation (33) qui reçoit au moins un élément d'amortissement (36) comporte une butée axiale pour l'élément d'amortissement (36), et
le carter (22) du moteur est serré entre les rouleaux (37) de l'élément d'amortissement (36) et le capuchon de boîtier (32) ou le pot.

7. Unité d'entraînement selon la revendication 6,
**caractérisée en ce que**
le moyen de fixation (33) du côté de la forme de pot du boîtier est formé par une cavité (35) réalisée dans le fond de pot (311), cavité qui reçoit l'élément d'amortissement (36), en partie selon un montage pressé, et
dans le carter de moteur (22), un épaulement d'appui (231, 241) est réalisé chaque fois tourné vers le fond de pot (311) et le fond de capuchon (321), épaulements dont l'un s'appuie contre les rouleaux (37) et l'autre contre une butée correspondante du capuchon (32), de préférence contre le fond de capuchon (321).

8. Unité d'entraînement selon la revendication 6,
**caractérisée en ce que**
le moyen de fixation (33, 34) du côté du pot du boîtier et du côté du capuchon du boîtier est chaque fois réalisé sous la forme d'une cavité (35, 40) dans le fond, recevant chaque fois un élément d'amortissement (36) en partie suivant un montage pressé et
le carter (22) du moteur comporte un épaulement d'appui (331, 341) tourné vers le fond de pot (311) et le fond de capuchon (321), et chaque épaulement s'appuie contre un rouleau (37).

9. Unité d'entraînement selon la revendication 8,
**caractérisée en ce que**
la profondeur axiale de la cavité (35, 40) du fond de pot (311) ou du fond de capuchon (321) est inférieure au diamètre extérieur des rouleaux (37), de préférence égale à la moitié.

10. Unité d'entraînement selon l'une quelconque des revendications 5 à 9,
**caractérisée en ce que**
le capuchon (32) est clipsé sur le pot (31) du boîtier.

11. Unité d'entraînement selon l'une quelconque des revendications 1 à 10,
**caractérisée en ce que**
les éléments de palier (25, 26) sont tenus au carter (22) du moteur par des branches de palier (24, 23).

12. Unité d'entraînement selon l'une quelconque des revendications 1 à 11,
**caractérisée en ce que**
l'élément d'amortissement (36) est en caoutchouc.
